Europäisches Patentamt

(19) European Patent Office

Office européen des brevets

(11) Publication number: **0 074 236 B1**

(12) **EUROPEAN PATENT SPECIFICATION**

(45) Date of publication of patent specification: 03.06.87

(51) Int. Cl.⁴: **B 62 D 51/04, B 62 D 59/04**

(21) Application number: **82304564.6**

(22) Date of filing: **31.08.82**

⑤④ **Steerable device for moving trailer type vehicles.**

(30) Priority: **07.09.81 GB 8127006**

(43) Date of publication of application:
**16.03.83 Bulletin 83/11**

(45) Publication of the grant of the patent:
**03.06.87 Bulletin 87/23**

(84) Designated Contracting States:
**BE DE FR GB NL**

(56) References cited:
**BE-A- 527 897**
**FR-A-1 216 706**
**GB-A- 606 857**
**US-A-2 867 451**
**US-A-2 878 884**
**US-A-3 105 704**
**US-A-3 166 141**
**US-A-3 179 196**
**US-A-3 352 374**
**US-A-3 679 233**
**US-A-3 924 701**

(73) Proprietor: **CRAVEN TASKER (SHEFFIELD) LIMITED**
**Staniforth Road**
**Darnall Sheffield S9 4LL (GB)**

(72) Inventor: **Nielsen, Hagbard**
**Spurveveji**
**6700 Esbjerg (DK)**
Inventor: **Thurman, Brian**
**133 Worksop Road**
**Swallownest Sheffield S31 0WB (GB)**

(74) Representative: **Paget, Hugh Charles Edward et al**
**MEWBURN ELLIS & CO. 2/3 Cursitor Street London EC4A 1BQ (GB)**

EP 0 074 236 B1

Courier Press, Leamington Spa, England.

## Description

The invention relates to a steerable device for moving trailer type vehicles.

It has been a particular problem for manufacturers of trailer type vehicles, but also for users of such vehicles, that for moving such vehicles about their works or parking areas they have needed at least one tractor unit always on hand. Such tractor units themselves take up a fair amount of space, are not always easy to manoeuvre into position for the coupling up of a trailer and, if reasonably new, represent a considerable financial outlay for what can only be regarded as non-productive work. If a very old and therefore inexpensive tractor unit is used for this sort of work, it will often be difficult to start and may turn out a great deal of smoke and fumes.

A steerable device is known in accordance with the prior art portion of Claim 1 (US—A—3166141) in which the weight of the front end of a trailer can be supported by the device. However, this previously known device is most suitable for connection to a trailer of relatively light weight because the connection of a light weight trailer to the device can be carried out by manual effort. If the device is to be connected to a relatively heavy trailer such as a house trailer, the trailer must first be jacked up by the use of a conventional jack in order that the tow ball carried by the device can be brought into position below the socket of the trailer hitch. Its disconnection is of course similarly inconvenient. Consequently, the connection and disconnection of the device to a relatively heavy trailer must inevitably always be a slow process. The use of jacks to raise heavy trailers can be a dangerous operation.

The invention as claimed in claim 1 is intended to provide a remedy and seeks to solve the problem of how to move much heavier trailer type vehicles around in relatively confined parking areas both safely and conveniently.

The advantages offered by the invention are mainly that by virtue of the fact that the device for moving a trailer vehicle around is a pedestrian operated device the person operating the device has excellent visibility underneath and around the sides of the trailer, and that the connection of the device to a very heavy trailer can be effected both quickly and conveniently and in great safety. A further advantage offered by the invention resides in the fact that the device is very compact and of very much smaller overall size than a conventional tractor unit; it can therefore be much more easily parked out of the way when not in use. It can be designed to be very stable, that is to say very unlikely to rear up at its front end when pulling a heavy trailer.

One way of carrying out the invention is described in detail below with reference to the drawings in which:

Figure 1 is a side view of a device embodying the invention, shown coupled to a trailer type vehicle,

Figure 2 is a perspective view of the device,

Figure 3 is a plan view,

Figure 4 is a view similar to Figure 1 and illustrating a somewhat modified device embodying the invention,

Figure 5 is a plan view thereof,

Figure 6 is a sectional view on the line 6—6 in Figure 4, and

Figure 7 is a side view of a front end of a tiller part of the modified device.

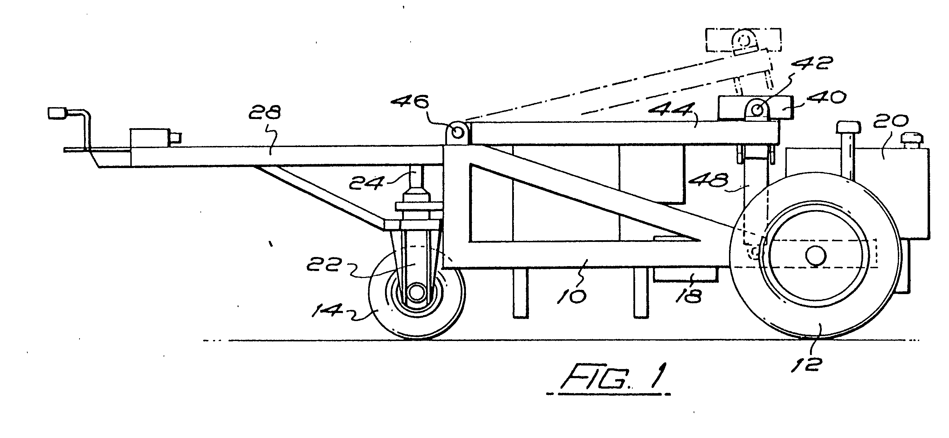

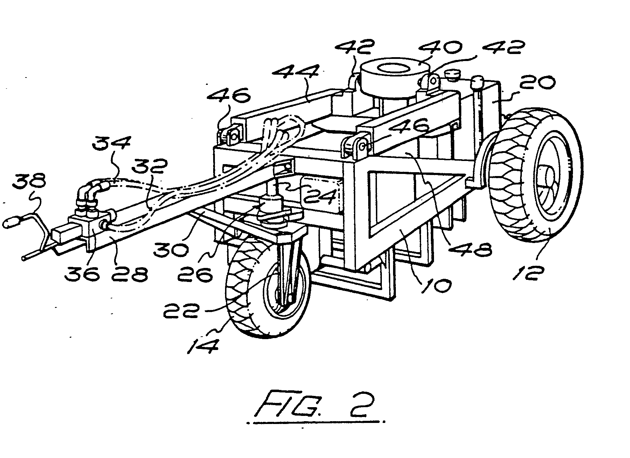

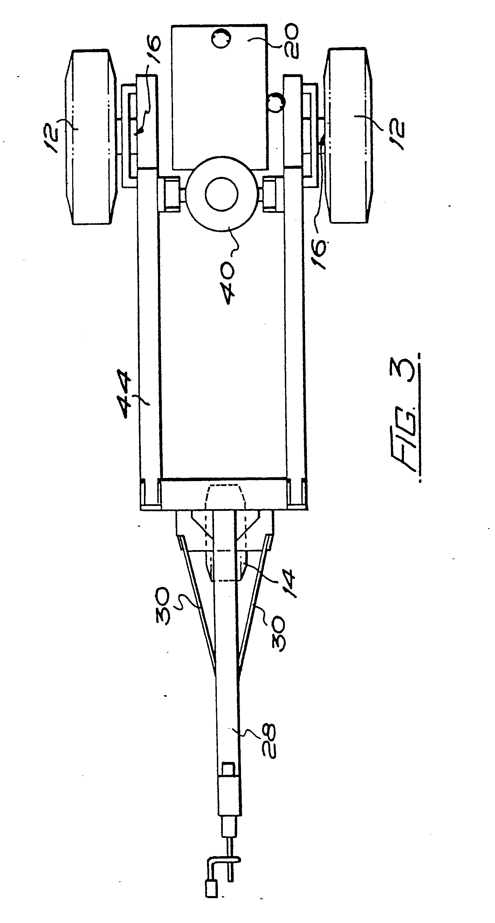

Referring now to Figures 1 to 3 of the drawings, the device there illustrated has a welded steel frame 10 provided with a pair of rearwardly disposed driving wheels 12 and a forwardly disposed steerable wheel 14. The driving wheels 12 are drivable by hydraulic motors 16 to which oil under pressure is delivered from a pump 18 driven by a diesel engine 20.

The steerable front wheel 14 is rotatably mounted in a steering fork 22 which is carried at the lower end of a pivot pin 24 mounted in bearings in brackets 26 projecting from the front of the frame. A tiller 28 for steering the device is connected to the pivot pin 24 and is braced by means of inclined support struts 30 connected to the steering fork 22. Flow and return pipes 32, 34 extend along the tiller to valve means 36 carried at its front end. A lever 38 for opening and closing the valve means to the flow of oil under pressure in opposite directions through the flow and return pipes can be operated by a person steering the device to cause the hydraulic motors to be driven in either direction. When the lever is in a neutral position, to which it returns automatically when released by the person operating the vehicle, there is hydraulic lock in the system so that the device is immovable in either direction. The device does not therefore require brakes.

The device is provided with means whereby it can be connected to a trailer type vehicle beneath that part of the trailer normally connected to the so-called fifth wheel connection of a tractor unit. These means are constituted by a bearing sleeve 40 trunnion mounted at 42 to one end of a carrier 44, the latter being pivotally connected at 46 to the frame 10. A hydraulic ram 48 is pivotally connected beneath the carrier at that end which supports the bearing sleeve 40, the ram reacting against a lower part of the frame 10. The arrangement is such that when the device has been manoeuvred, as previously described, so that the bearing sleeve 40 is almost exactly beneath the depending coupling pin of the trailer which it is desired to move, the output of the pump 18 can be diverted to the hydraulic ram 48 (by valve means not shown) so that the bearing sleeve is brought into engagement with the coupling pin and then lifts the front end of the trailer.

The device is such that when it has been connected to a trailer vehicle as just described, the coupled combination can be manoeuvred very easily indeed and with much greater safety than when using a conventional tractor unit. This is because a person operating the device has excellent visibility underneath and around the sides of the trailer. It will be understood that such a device is only required to operate at a walking speed. Consequently, it can have a relatively small engine and can operate very quietly. The device is very compact and of very much smaller overall size than a conventional tractor unit and can therefore be much more easily parked out of the way when not in use.

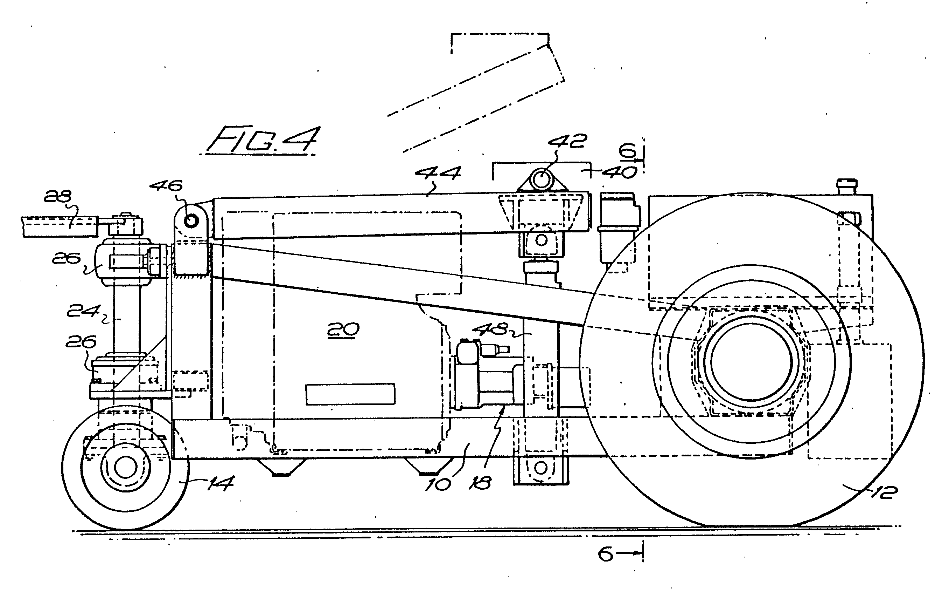

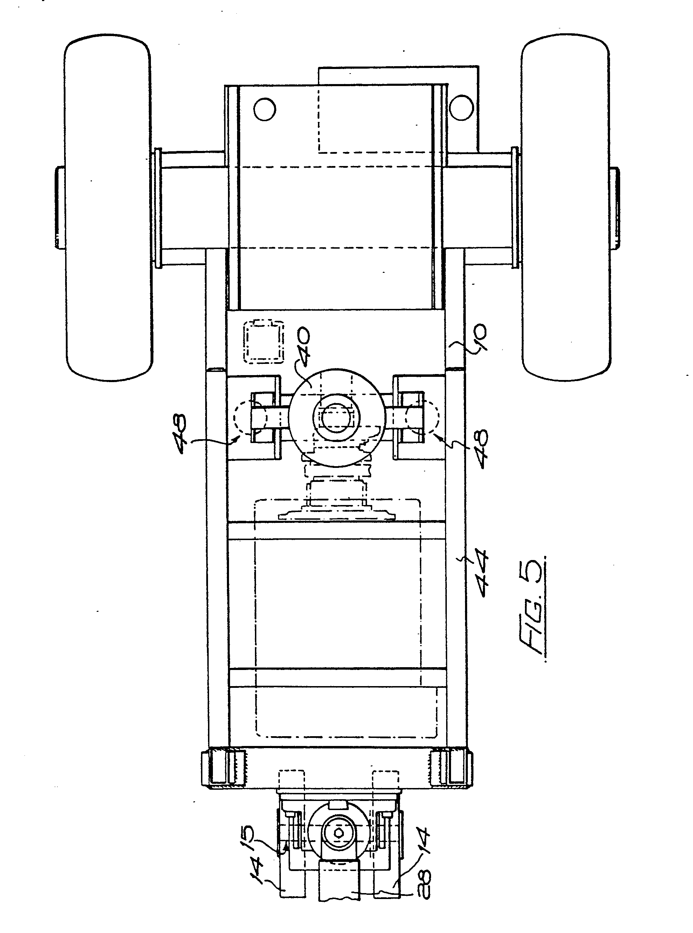

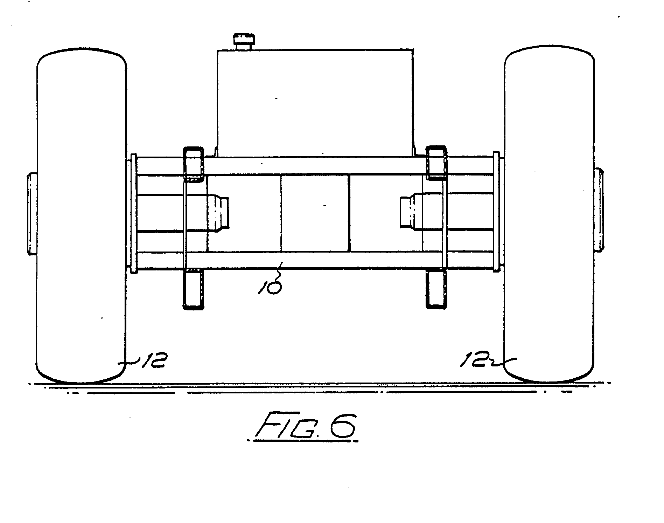

Referring now to Figures 4 to 7 of the drawings, the modified device there illustrated is very similar to that previously described in that it has a welded steel frame 10, a pair of rearwardly disposed driving wheels 12 and means whereby it can be connected to a trailer type vehicle, these means being constituted by the bearing sleeve 40 trunnion mounted at 42 to the carrier 44, the latter being pivotally connected at 46 to the frame. However, the device is provided with a pair of hydraulic rams 48, these being powered by a pump 18 driven by an engine 20. Also, in this case the engine is mounted towards the front of the device and the bearing sleeve 40 is located further forwardly than before for reasons of safety, that is to say to reduce the risk that the front end of the device might rear up when pulling a heavy trailer.

A further variation from the previously described device is in the fact that the device is provided with a pair of steerable wheels 14, these being freely rotatable on the opposite ends of an axle 15 carried at the lower end of the pivot pin 24. However, as in the previously described device, the pivot pin is mounted in bearings in the brackets 26 projecting from the front of the frame, and the tiller 28 for steering the device is connected to the pivot pin.

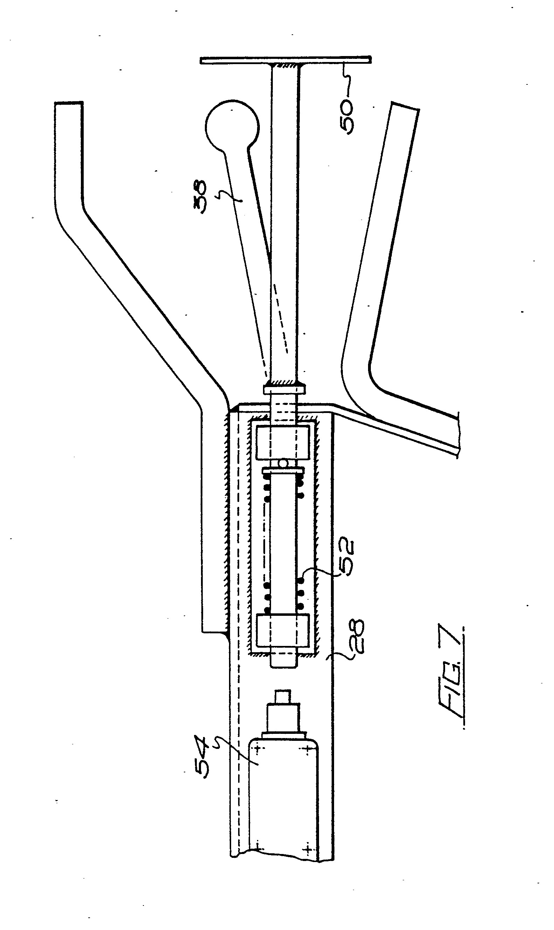

Referring now to Figure 7, the tiller of the modified device is shown to carry safety means for preventing a person steering the device from becoming trapped thereby. The safety means include a forwardly extending buffer element 50 which is slidably mounted relative to the tiller. The arrangement is such that on contacting an obstruction, which may of course be the body of the person steering the device, the buffer element is displaced against the force of a spring 52 and actuates a micro switch 54 to cut off the drive to the power driven wheels 12. (The drive to the power driven wheels can of course be cut off in a number of ways. For example, the actuation of the micro switch may be arranged to stop the engine or may be arranged to bring about hydraulic lock in the hydrostatic transmission. It may at the same time be arranged to apply a brake or to engage a mechanical lock in the drive transmission). The addition of the displaceable buffer element does not of course interfere with the movement of the lever 38 for opening and closing the valve means which cause the hydraulic motors to be driven in either direction as required.

Various other modifications may be made. For example, although the hydraulic transmission of the device described and illustrated is capable of braking the device, it may be thought desirable to fit the device with braking means acting on the transmission mechanism and/or with conventional brakes acting on at least one of the wheels or on at least a pair of the wheels to be operated by a manually operable lever. The device can of course be fitted either with a diesel engine or with a petrol engine.

**Claims**

1. A steerable device for moving a trailer type vehicle, the device including a frame (10) provided with at least three wheels (12, 14), an engine (20) for driving at least one of said wheels by way of a hydraulic pump (18) and a hydraulic motor or motors (16), a tiller (28) for turning the steerable wheel or wheels (14) of the device, and connection means whereby the device can be connected to that part of a trailer type vehicle normally connected to the so-called fifth wheel connection of a tractor unit, characterised in that the connection means are constituted by a bearing sleeve (40) trunnion mounted to one end of a carrier (44) the latter being pivotally connected at its other end to the frame (10), means being provided for lifting the carrier (44) relative to the frame (10) so that the bearing sleeve (40) can be engaged with the usual coupling pin of the trailer and can then lift the front end of the trailer, valve means (36) and a lever (38) associated with the valve means being provided at the front end of the tiller for opening and closing the valve means to the flow of oil in opposite directions through flow and return pipes (32, 34) extending along the tiller (28), the lever (38) being operable by a person steering the device to cause the hydraulic motor or motors (16) to be driven in either direction so that the device can be power driven forwardly or in reverse.

2. A steerable device according to claim 1, in which the means for lifting the carrier relative to the frame are constituted by at least one hydraulic ram (48).

3. A steerable device according to any one of the preceding claims, in which the tiller (28) also carries safety means for preventing a person steering the device from becoming trapped thereby, the safety means including a forwardly extending buffer element (50), said buffer element being slidably mounted relative to the tiller (28) and being displaced against the force of spring means (52) on contacting an obstruction to cut off drive to the at least one power driven wheel (12).

4. A steerable device according to claim 3, in which the displacement of the buffer element (50) against the force of the spring means (52), relative to the tiller (28), is effective to actuate a micro switch (54) which immediately cuts off drive to the at least one power driven wheel (12).

**Patentansprüche**

1. Steuerungsgerät zum Bewegen von Anhängerfahrzeugen, bestehend aus einem Rahmen (10) mit mindestens drei Rädern (12, 14), einem Motor (20) zum Antreiben mindestens eines der Räder mittels einer Hydraulikpumpe (18) und eines oder mehrerer Hydraulikmotoren (16), einer Lenkstange (28) zum Verschwenken des oder der steuerbaren Räder (14) des Gerätes und einer Verbindungseinrichtung, mit der das Gerät mit demjenigen Teil eines Anhängerfahrzeuges verbindbar ist, das normalerweise mit der Kupplung eines Zugfahrzeugs verbunden ist, dadurch gekennzeichnet, daß die Verbindungseinrichtung aus einer Lagermuffe (40) besteht, die an einem Ende eines Trägers (44) kippbar gelagert ist, der an seinem anderen Ende mit dem Rahmen (10) schwenkbar verbunden ist, wobei eine Einrichtung vorgesehen ist, um den Träger (44) relativ zum Rahmen (10) anzuheben, so daß die Lagermuffe (40) mit dem üblichen Kupplungszapfen des Anhängers in Eingriff bringbar ist und das vordere Ende des Anhängers anheben kann, wobei Ventile (36) und ein diesen zugeordneter Hebel (38) am vorderen Ende der Lenkstange angeordnet sind, um die Ventile zu öffnen und zu schließen, damit Öl in entgegengesetzten Richtungen durch Vor- und Rücklaufleitungen (32, 34) hindurchströmt, die sich längs der Lenkstange (28) erstrecken, wobei der Hebel (38) von einer das Gerät steuernden Person betätigbar ist, damit der oder die Hydraulikmotoren (16) in jeder Richtung antreibbar sind, so daß das Gerät vorwärts und rückwärts angetrieben werden kann.

2. Steuerungsgerät nach Anspruch 1, wobei die Einrichtung zum Anheben des Trägers relativ zum Rahmen aus mindestens einem hydraulischen Schubkolben (28) besteht.

3. Steuerungsgerät nach einem der vorhergehenden Ansprüche, wobei die Lenkstange (28) auch eine Sicherheitseinrichtung trägt, die eine Gefährdung der das Gerät steuernden Person durch das Gerät verhindert, wobei die Sicherheitseinrichtung ein nach vorne ragendes Pufferelement (50) aufweist, das relativ zu der Lenkstange (28) verschiebbar gelagert und beim Aüftreffen auf ein Hindernis gegen die Kraft einer Feder (52) verschiebbar ist, um den Antrieb des oder der angetriebenen Räder (12) zu unterbrechen.

4. Steuerungsgerät nach Anspruch 3, wobei die Verschiebung des Pufferelements (50) gegen die Kraft der Feder (52) relativ zur der Lenkstange (28) einen Mikroschalter (54) betätigt, der den Antrieb des oder der angetriebenen Räder (12) unverzüglich unterbricht.

**Revendications**

1. Dispositif de conduite pour mouvoir un véhicule remorqué, le dispositif comprenant un châssis (10) pourvu d'au moins trois roues (12, 14), un moteur (20) pour entraîner au moins l'une desdites roues par une pompe hydraulique (18) et un moteur ou des moteurs hydrauliques (16), une barre de direction (28) pour tourner la ou les roues dirigeables (14) du dispositif, et des moyens de connexion par lesquels le dispositif peut être connecté à la partie d'un véhicule remorqué normalement connectée à la connexion à sellette d'une unité tractrice, caractérisé en ce que les moyens de connexion sont constitués d'un manchon de support (40) monté par tourillon à une extrémité d'un appui (44), ce dernier étant connecté pivotant à son autre extrémité au châssis (10), des moyens étant prévus pour élever l'appui (44) relativement au châssis (10) de manière que le manchon de support (40) puisse être mis en engagement avec l'axe usuel d'accrochage de la remorque et puisse alors élever l'extrémité avant de la remorque, d'un moyen formant vanne (36) et un levier (38) associé au moyen formant vanne étant prévu à l'extrémité avant de la barre de direction pour ouvrir et fermer le moyen formant vanne à l'écoulement d'huile en directions opposées à travers des tubes d'écoulement et de retour (32, 34), s'étendant le long de la barre de direction (28), le levier (38) pouvant être manoeuvré par une personne dirigeant le dispositif pour forcer le moteur ou les moteurs hydrauliques (16) à être entraînés dans chaque direction de manière que le dispositif puisse être mû par moteur vers l'avant ou en reculant.

2. Dispositif de conduite selon la revendication 1 où les moyens pour élever l'appui relativement au châssis sont constitués d'au moins un vérin hydraulique (48).

3. Dispositif de conduite selon l'une quelconque des revendications précédentes où la barre de direction (28) porte également des moyens de sécurité pour empêcher une personne conduisant le dispositif de se trouver bloquée, les moyens de sécurité comprenant un élément amortisseur (50) s'étendant vers l'avant, ledit élément amortisseur étant monté coulissant relativement à la barre de direction (28) et étant déplacé contre la force d'un moyen formant ressort (52) lors d'un contact avec une obstruction pour couper l'entraînement vers la au moins une roue par moteur (12).

4. Dispositif de conduite selon la revendication 3 où le déplacement de l'élément amortisseur (50) contre la force du moyen formant ressort (52), relativement à la barre de direction (28), est efficace pour actionner un microrupteur (54) qui coupe immédiatement l'entraînement de la au moins une roue mue par moteur (12).

FIG. 1

0 074 236

FIG. 2

_FIG. 3_

FIG.4

0 074 236

FIG. 5

_FIG. 6._

FIG. 7